(19) Europäisches Patentamt
European Patent Office
Office européen des brevets

(11) **EP 2 959 970 B1**

(12) **EUROPEAN PATENT SPECIFICATION**

(45) Date of publication and mention
of the grant of the patent:
**05.12.2018 Bulletin 2018/49**

(51) Int Cl.:
*B01J 23/42* (2006.01)    *B01J 35/10* (2006.01)
*C01B 32/20* (2017.01)    *B01J 21/18* (2006.01)
*H01M 4/90* (2006.01)    *H01M 4/92* (2006.01)
*H01M 4/96* (2006.01)    *H01M 8/10* (2016.01)
*B01J 37/06* (2006.01)    *B01J 37/08* (2006.01)
*B01J 37/34* (2006.01)    *B01J 35/00* (2006.01)
*B01J 32/00* (2006.01)    *B01J 23/50* (2006.01)

(21) Application number: **14754099.1**

(22) Date of filing: **21.02.2014**

(86) International application number:
**PCT/JP2014/054228**

(87) International publication number:
**WO 2014/129597 (28.08.2014 Gazette 2014/35)**

(54) **CARBON MATERIAL FOR CATALYST SUPPORT USE**

KOHLENSTOFFMATERIAL ZUR VERWENDUNG ALS KATALYSATORTRÄGER

MATIÈRIAU DE CARBONE POUR UNE UTILISATION DE SUPPORT DE CATALYSEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.02.2013 JP 2013032456**

(43) Date of publication of application:
**30.12.2015 Bulletin 2015/53**

(73) Proprietors:
• **Nippon Steel & Sumikin Chemical Co., Ltd.**
**Chiyoda-ku**
**Tokyo 101-0021 (JP)**
• **Nippon Steel & Sumitomo Metal Corporation**
**Tokyo 100-8071 (JP)**

(72) Inventors:
• **MIZUUCHI, Kazuhiko**
**Kitakyushu-shi**
**Fukuoka 804-8503 (JP)**
• **KOUNO, Takumi**
**Kitakyushu-shi**
**Fukuoka 804-8503 (JP)**
• **KATAYAMA, Masakazu**
**Kitakyushu-shi**
**Fukuoka 804-8503 (JP)**
• **HIGUCHI, Masakazu**
**Kitakyushu-shi**
**Fukuoka 804-8503 (JP)**
• **NISHI, Nobuyuki**
**Kanazawa-shi**
**Ishikawa 920-1151 (JP)**
• **IIJIMA, Takashi**
**Tokyo 100-8071 (JP)**
• **HIYOSHI, Masataka**
**Tokyo 100-8071 (JP)**
• **MATSUMOTO, Katsumasa**
**Tokyo 100-8071 (JP)**

(74) Representative: **Vossius & Partner**
**Patentanwälte Rechtsanwälte mbB**
**Siebertstrasse 3**
**81675 München (DE)**

(56) References cited:
**WO-A1-2009/075264**    **JP-A- 2011 514 304**
**JP-A- 2013 178 927**    **US-A1- 2009 208 780**
**US-A1- 2011 058 308**

**Description**

Technical Field

The present invention relates to a carbon material which is used for a catalyst support and a method for producing the same.

Background Art

A catalyst which metal particles are dispersed in a porous support is widely used in hydrogenation reactions, dehydrogenation reactions, etc. As the support, silica, alumina, and activated carbon are widely used.

As the characteristics which are sought from a support, there are the shape, size, composition, structure, chemical stability in the environment of use, heat stability, durability, affinity with metal particles which are supported, efficiency of contact with the gas and liquid starting materials, etc. In particular, a support which has a high surface area is being sought.

A metal catalyst is dispersed on the surface of the porous substance (support) in the form of fine particles. A catalytic reaction occurs on the surface of the metal catalyst. For this reason, to raise the reaction efficiency, it is extremely preferable that the diffusibility of the reaction starting materials to the surface of the catalyst metal be good and the products which are produced in the reaction be quickly diffused and removed from the surface of the catalyst metal.

Activated carbon has electrical conductivity and is excellent in chemical stability, but is consumed by oxidation in an oxidizing atmosphere. Further, activated carbon is unstable heat-wise. To raise the catalytic activity of the supported metal catalyst, the temperature for treatment of the supported metal catalyst is restricted to the region of heat stability of activated carbon or less. Activated carbon is mostly comprised of micropores with diameters of 2 nm or less. The diffusibility of the reaction starting materials to the catalyst metal which is dispersed inside the pores cannot necessarily be said to be good.

Silica and alumina are excellent in oxidation resistance and heat resistance, but are insulators and are difficult to use in catalyst systems where electron transfer occurs. The diffusibility of the reaction starting materials and the diffusibility of the reaction products in the catalyst metal inside the pores are not necessarily good in the same way as activated carbon.

As a catalyst support obtained by improving an existing carbon material, a carbon material which is produced by heating activated carbon which has a specific surface area of 1700 $m^2$/g or more at 1600 to 2500°C, has an average pore size of 2.5 to 4.0 nm, has a specific surface area of 800 $m^2$/g or more, and has an average particle size of 1 to 5 $\mu$m is described in PLT 1.

Further, high surface area graphitized carbon suitable for catalyst applications comprised of ketjen black, one type of carbon black, which is heat treated at 800 to 2700°C in range and treated by oxidation is described in PLT 2.

As a novel catalyst support of a carbon material, a porous conductive carbon substance which has pores which are connected with each other in a first and second size range of from 10 $\mu$m to 100 nm and from less than 100 nm to 3 nm and which has graphene structures is described in PLT 3. Further, a mesoporous carbon molecular sieve which has a 500 nm or less average primary particle size, a 3 nm to 6 nm average mesopore size, and a 500 to 2000 $m^2$/g BET surface area is described in PLT 4.

The inventors proposed a dendritic carbon nanostructure comprised of rod shapes or ring shapes which contain carbon and are branched to form 3D structures and which join with each other to form a network and discovered that this structure can be used as a support for supporting a catalyst (PLT 5). However, along with recent advances in technology, the environment of use of catalysts has become further harsher, so further improvements in durability and other aspects of performance have become necessary from catalyst supports as well.

Citations List

Patent Literature

PLT 1: Japanese Patent Publication No. 2008-290062A
PLT 2: Japanese Patent Publication No. 2011-514304A
PLT 3: Japanese Patent Publication No. 2009-538813A
PLT 4: Japanese Patent Publication No. 2005-154268A
PLT 5: WO2009/075264

Summary of Invention

Technical Problem

The present invention provides a carbon material for catalyst support use which, when used as a support for supporting a catalyst, maintains a high porosity while being stable chemically, having electrical conductivity, being excellent in durability even in a harsh environment of use, and being excellent in diffusibility of the reaction starting materials and reaction products.

Solution to Problem

The inventors etc. engaged in repeated in-depth studies to solve the above problem and as a result changed the structure of the carbon material which has the 3D dendritic structure and discovered a carbon material for catalyst support use which maintains a high level of porosity while being excellent in diffusibility of the reaction starting materials and reaction products in the pores, being chemically stable, having electrical conductivity, and being excellent in durability even in a harsh environment of use and thereby completed the present invention.
The present invention is defined in claim 1 and provides a carbon material for catalyst support use which is comprised of dendritic carbon mesoporous structures which have 3D structures of branched carbon-containing rod shapes or carbon-containing ring shapes, has a pore size of 1 to 20 nm and a cumulative pore volume of 0.2 to 1.5 cc/g found by analyzing a nitrogen adsorption isotherm by the Dollimore-Heal method, and has a powder X-ray diffraction spectrum which has a peak corresponding to a 002 diffraction line of graphite between diffraction angles ($2\theta$: degrees) of 20 to 30 degrees and has a peak with a half value width of 0.1 degree to 1.0 degree at 25.5 to 26.5 degrees.
Furthermore, the present invention also provides a method for producing the carbon material for catalyst support use.

Advantageous Effects of Invention

The carbon material for catalyst support use of the present invention, compared with the conventional support, maintains a high porosity while being excellent in diffusibility of the reaction starting materials and reaction products in the pores and particularly being extremely excellent in durability even in a harsh environment of use.
In particular, if using a platinum catalyst which uses the support of the present invention for a polymer electrolyte fuel cell, a fuel cell can be obtained which has a small rate of drop of the amount of current over a long period of time and is excellent in durability and, as a result, the amount of use of platinum can be reduced, a large scale reduction of cost can be realized, and the growth of the commercial market for polymer electrolyte type fuel cells can be accelerated.

Brief Description of Drawings

FIG. 1 is an XRD (X-ray diffraction) image of a carbon material of Example 1 of the present invention.
FIG. 2 is an enlarged view of an XRD image of a carbon material of Example 1 of the present invention and shows a method of measurement of a half value width.
FIG. 3 is an XRD image of a carbon material of Example 5 of the present invention.
FIG. 4 is an XRD image of a carbon material of Comparative Example 1 of the present invention.
FIG. 5 is an XRD image of a carbon material of Reference Example 3 of the present invention.
FIG. 6 is a scan electron microscope (SEM) image (magnification 100K) of a carbon material of Example 1 of the present invention.
FIG. 7 is a scan electron microscope (SEM) image (magnification 100K) of a carbon material of Comparative Example 4 of the present invention.

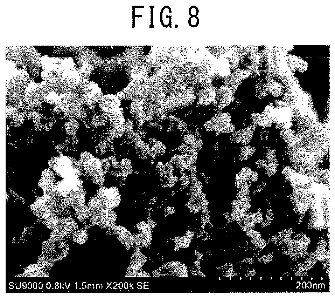

FIG. 8 is a scan electron microscope (SEM) image (magnification 100K) of a carbon material of Reference Example 3 of the present invention.

Description of Embodiments

Embodiments of the present invention will be explained below. Note that the present invention is not limited to these embodiments.
The carbon material for catalyst support use of the present invention is obtained by synthesizing silver acetylide, then performing a phase separation reaction.

First, acetylene gas is blown into an ammonia water solution of silver nitrate while applying ultrasonic waves to the solution so as to thereby form silver acetylide as a precipitate. At this time, it is preferable to stir the solution at the same time as applying ultrasonic waves. Note that the ultrasonic waves can be applied by placing an ultrasonic transducer in the container which contains the solution or by setting the container in for example an ultrasonic cleaner. Further, instead of silver nitrate, for example, silver oxide ($Ag_2O$) etc. can be used.

The precipitate is filtered, centrifuged, etc. to roughly separate the water content, then is divided into reaction tubes which are placed in a vacuum type electric furnace or vacuum type high temperature tank and heat treated at 60°C to 80°C in temperature, for example, for 12 hours or more. This being done, the silver acetylide segregates and metal-encapsulated dendritic nanostructures, in which metal silver particles is encapsulated, are formed.

Note that if causing the precipitate to completely dry, the result becomes unstable and friction or other stimulation will sometimes cause an explosive reaction. Further, the precipitate can be subjected to solvent substitution by for example, the method of preparing a solvent other than the ammonia water solution and using this solvent for washing etc.

The silver acetylide precipitate is heat treated as is for 10 minutes to 30 minutes up to 160°C to 200°C (first heat treatment). The silver acetylide undergoes an explosive phase separation reaction near 150°C whereby the encapsulated silver erupts and a large number of mesopores are formed at the surface and inside. By this, dendritic nanostructures of carbon (below, referred to as "mesoporous carbon nanodendrites" or simply "carbon nanodendrites") are obtained.

In this state, the carbon nanodendrites have silver (particles) remaining on their surfaces, so these silver and unstable carbon components are removed. In this case, in particular, by using a nitric acid aqueous solution to dissolve and wash them away, the removed silver can be efficiently reutilized as silver nitrate. A nitric acid aqueous solution may be used for washing repeatedly until the silver can be removed. The above obtained carbon nanodendrites themselves have sufficiently high specific surface areas, for example, 1500 $m^2/g$ or more.

Next, the carbon nanodendrites are heat treated under a reduced pressure atmosphere or an inert gas atmosphere at 1600°C or more (second heat treatment). As the inert gas, for example, nitrogen, argon, helium, etc. may be used. Among these as well, argon is preferably used.

The temperature of the heat treatment is 1600 to 2200°C. The time of the heat treatment changes depending on the heating temperature, but is preferably 0.5 to 4 hours. For the heating system, for example, resistance heating, microwave heating, high frequency induction heating, etc. may be used. The furnace type may be a batch type furnace, tunnel furnace, or other furnace. It is not limited so long as an inert or reduced pressure atmosphere can be achieved. The above method can obtain the carbon material for catalyst support use which is targeted by the present invention.

The carbon material for catalyst support use of the present invention has so-called "dendritic structures" comprised of rod-shaped or ring-shaped unit structures connected with each other three-dimensionally. The dendritic structures can be observed by a scan electron microscope (SEM). The lengths of this dentritic parts are usually 50 to 300 nm, while the diameters of the dendritic parts are 30 to 150 nm or so.

The carbon material for catalyst support use of the present invention which is heat treated at 1600 to 2200°C has a BET specific surface area of 200 to 1300 $m^2/g$ or a similar value to the catalyst support which is obtained by heat treating activated carbon (PLT 1). However, the pores of the carbon material for catalyst support use of the present invention are formed by nanoscale explosive reactions which cause eruption of encapsulated silver. The pores mainly form continuous mesopores. When supporting the catalyst metal particles inside pores, generally, the particle size is several nanometers, but in the carbon material for catalyst support use of the present invention, sufficient space is secured for diffusion of the reaction substances and reaction products inside the pores. On the other hand, even if the BET specific surface area is the same, in the case of activated carbon, the pores are not continuous, so even if supporting catalyst metal particles, it is difficult and insufficient for the reaction substances and reaction products to diffuse inside the pores.

The carbon material for catalyst support use of the present invention has a cumulative pore volume of 0.2 cc/g to 1.5 cc/g in the diameter 1 nm to 20 nm region. Catalyst metal particles which are usually prepared to diameters of several nm (2 to 10 nm) are dispersed inside the pores in a state of high dispersion. If the metal particles are held in cylindrical shaped pores, combination of catalyst particles with each other and peeling off are suppressed. This is believed to contribute to longer catalyst lifetime. Note that, there are several analytical techniques for calculating the pore size and cumulative pore volume, but they can be calculated by analyzing the adsorption isotherm of the adsorption process by the Dollimore-Heal method (DH method).

The carbon material for catalyst support use of the present invention has an amount of adsorption per unit area (ml/$m^2$) ($V_{10}/S$: Q-value) when designating the amount of steam adsorption at 25°C and a relative pressure of 10% as (ml/g) ($V_{10}$) and designating the BET specific surface area of the carbon material ($m^2/g$) as (S) of $0.05 \times 10^{-3}$ to $1.0 \times 10^{-3}$, preferably $0.7 \times 10^{-3}$ or less. When applying the support carbon material of the present invention to a cathode of a polymer electrolyte fuel cell, it is essential that protons as the reaction substances be transported to the metal particles which are supported inside the pores. The protons move through the medium of the water which is adsorbed on the inside walls of the pores (protonic conduction), so control of the hydrophilicity of the inside of the pores governs the performance of the catalyst. The inventors etc. engaged in in-depth studies and as a result discovered the Q-value as the optimum indicator of hydrophilicity for protonic conduction. To obtain protonic conduction in a harsh operating environment of low moisture, control of the amount of steam adsorption at a low relative pressure is optimum. As a result of in-depth studies, a relative pressure 10% amount of steam adsorption is most suitable. Furthermore, by dividing the 10% amount of steam adsorption by the BET value, expression as a standardized indicator of the hydrophilicity per unit surface area becomes possible. If the Q-value is smaller than $0.05 \times 10^{-3}$, the protonic conduction resistance at the time of operation under low moisture conditions becomes large, so the overvoltage becomes larger, so this is not suitable for the cathode of a polymer electrolyte fuel cell. If the Q-value is larger than $1.0 \times 10^{-3}$, the hydrophilicity is too high, so when operating under high humidity conditions, the so-called "flooding phenomenon" will occur and power can no longer be generated.

The carbon material for catalyst support use of the present invention is characterized in that the X-ray diffraction spectrum by the powder X-ray diffraction (XRD) method has a peak corresponding to the 002 diffraction line of graphite between the diffraction angles ($2\theta$: degrees) of 20 to 30 degrees and has a peak of a half value width of 0.1 degree to 1.0 degree at 25.5 to 26.5 degrees. The carbon material of the present invention can withstand even use under a high oxidizing harsh environment because of the stacked structures of graphene grown due to the 1600 to 2200°C heat treatment. Further, simultaneously, catalyst performance excellent in diffusibility of the reaction starting materials and reaction products can be exhibited because of the amorphous structures comprised of nanosize graphene derived from the mesoporous pore structures. The biggest feature of the carbon material of the present invention is the possession of a structure in which both grown graphene stacked structures and nanosize graphene amorphous structures are copresent. The grown graphene stacked structures are specifically evaluated by the presence of the peak at 25.5 to 26.5 degrees in the X-ray diffraction. The line width is 0.1 to 1.0 degree. If smaller than 0.1 degree, the stacked structures grow too much, so the pores end up being crushed and the gas diffusibility can no longer be maintained. If larger than 1.0 degree, the stacked structures do not sufficiently grow, so the consumption by oxidation ends up becoming remarkable and a harsh operating environment can no longer be withstood. Further, amorphous structures comprised of nanosize graphene are shown by the presence of a broad peak between 20 to 30 degrees. If this broad peak (corresponding to 002 diffraction line of graphite) is not present, it means the structures are comprised of irregular carbon not containing even nanosize graphene, mesoporous structures are not maintained, and the gas diffusibility ends up falling.

The thus obtained carbon material for catalyst support use of the present invention, when used as a catalyst support, maintains a high porosity compared with a conventional support while being excellent as well in diffusibility of the reaction starting materials and reaction products in the pores and particularly being extremely excellent in durability even in a harsh environment of use.

The carbon material for catalyst support use of the present invention can withstand up to 1000°C or so of heating when heat treating the supported catalyst particles to activate them compared with the conventional activated carbon catalyst where substantially 500°C or so was the upper limit temperature, so the restrictions on the activation conditions are greatly eased. On top of this, compared with the conventional activated carbon support, the consumption of the component carbon by hydrogen, CO, $CO_2$, etc. is greatly suppressed.

Examples

Below, examples of the present invention will be explained, but the present invention is not limited to these.

The carbon material for catalyst support use which was obtained in the present invention was evaluated as follows:

For the structure of the carbon material, a Hitachi High Technologies field emission scanning electron microscope (SEM) Model SU-9000 was used to examine the shape and confirm the presence of carbon nanodendritic structures.

For measurement of the nitrogen adsorption BET specific surface area pore size and cumulative pore volume, a Quantachrome Instruments Autosorb Model I-MP was used. The pore size and cumulative pore volume were calculated by analyzing the adsorption isotherm of the adsorption process by the Dollimore-Heal method (DH method). The analysis program built in the apparatus was used to calculate the cumulative pore volume (cc/g) between the pore sizes 1.0 to 20 nm.

The amount of steam absorption at 25°C was measured using a Bel Japan high precision vapor adsorption measuring apparatus BELSORP-aqua3. The samples which were prepared from the examples and comparative examples described below were pretreated for degassing at 120°C and 1 Pa or less for 2 hours, were held in a 25°C constant temperature tank, and were gradually supplied with steam from a vacuum state to a saturated vapor pressure of steam at 25°C to change the relative humidity in stages. The amounts of steam adsorption were measured there.

Adsorption isotherms were prepared from the obtained measurement results, the amounts of steam adsorption at relative humidities of 10% and 90% were read, and the amounts were converted to volumes of steam in standard state per gram of sample. The amounts of steam adsorption (ml/g) at 25°C and a steam relative pressure of 10% ($V_{10}$) were divided by the nitrogen adsorption BET surface area ($m^2/g$) (S) to calculate the amounts of steam adsorption ($ml/m^2$) per unit area ($V_{10}/S$: Q-value).

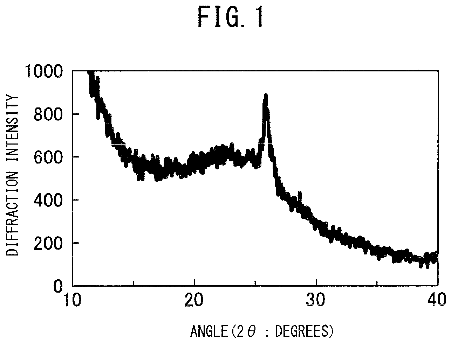

A Rigaku sample horizontal type strong X-ray diffraction apparatus RINT TTRIII was used to measure the powder X-ray diffraction pattern. The measurement was performed at ordinary temperature. The measurements were performed at 0.02 degree steps at one degree/min. The position of the d002 diffraction line which is normally seen in graphite crystals was 2θ (≈26.5 degrees), but in Examples 1 to 6 of the present invention, a peak corresponding to the 002 diffraction line is present between the diffraction angle (2θ: degrees) of 20 to 30 degrees and a peak with a half value width of 0.1 degree to 1.0 degree was observed at 25.5 to 26.5 degrees. This state is shown in FIG. 1.

The carbon material for catalyst support use of the present invention is obtained by the following method. Further, the results of evaluation of the carbon materials of Examples 1 to 6, Comparative Examples 1 to 4, and Reference Examples 1 to 3 are shown in Table 1.

Example 1

First, an ammonia aqueous solution which contains silver nitrate in a concentration of 1.1 mol% (1.9%): 150 ml was prepared in a flask. Argon or dry nitrogen or other inert gas was used to remove the residual oxygen. This solution was stirred and an ultrasonic transducer was dipped in the liquid to give vibration. While doing this, acetylene gas was blown into this solution by a 25 ml/min flow rate for about 4 minutes.

In the solution, solids of silver acetylide formed. After the silver acetylide completely precipitated, the precipitate was obtained by filtration by a membrane filter. At the time of filtration, the precipitate was washed by methanol and some ethanol was added to wet the precipitate with that methanol. The silver acetylide precipitate in the state wet with methanol was rapidly heated in a vacuum dryer up to 160°C to 200°C in temperature and held at that temperature for 20 minutes (first heat treatment). While holding it, nanoscale explosive reactions occurred and the silver erupted whereby an intermediate product comprised of carbon with silver deposited on its surface was obtained.

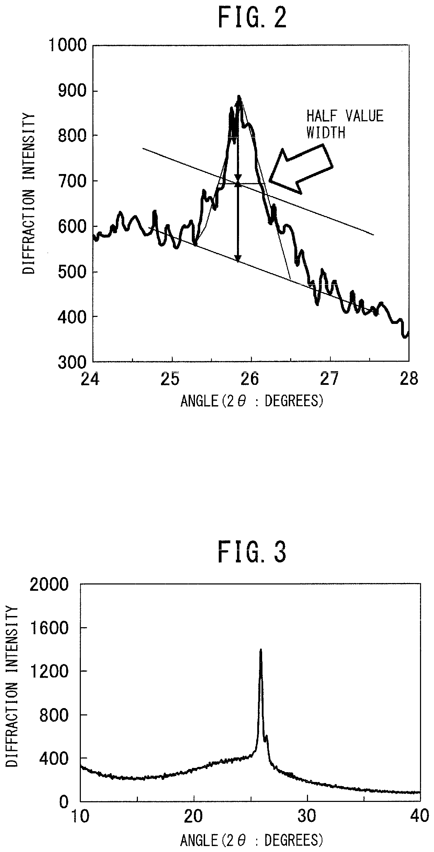

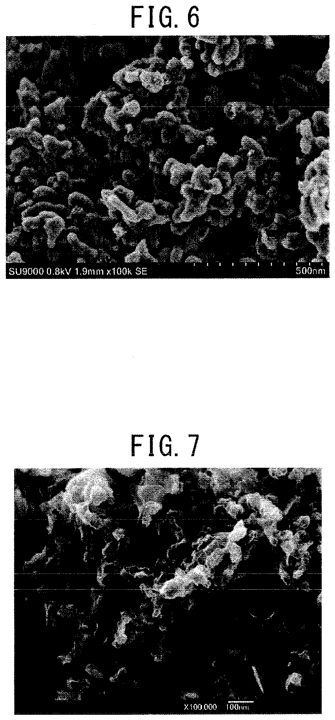

This intermediate product was washed by concentrated nitric acid for 1 hour to dissolve away the silver which remained at the surface etc. as silver nitrate and to dissolve away unstable carbon compounds. The intermediate product from which these were dissolved away was rinsed, then placed in a graphite crucible and heat treated in an argon atmosphere in a graphitization furnace at 1600°C for 2 hours (second heat treatment) to obtain a carbon material for catalyst support use. An example of the XRD of the carbon material which was obtained in Example 1 is shown in FIG. 1. An enlargement of the extent of angle of FIG. 1 is shown in FIG. 2. From the chart of FIG. 2, the peak position and half value width of the peak were found. As a result, the peak position was 25.9 degrees and the half value width was 0.7 degree. An SEM image of the carbon material which was obtained in Example 1 is shown in FIG. 6. The diameter of the dendritic part was about 60 nm, while the length was 130 nm.

Example 2

Except for making the temperature of the second heat treatment 1800°C, the same procedure was performed as in Example 1 to obtain a carbon material.

Example 3

Except for making the temperature of the second heat treatment 2000°C and making the treatment time 0.5 hour, the same procedure was performed as in Example 1 to obtain a carbon material.

Example 4

Except for making the heating time of the second heat treatment 2 hours, the same procedure was performed as in Example 3 to obtain a carbon material.

Example 5

Except for making the heating time of the second heat treatment 4 hours, the same procedure was performed as in Example 3 to obtain a carbon material. An example of the XRD of the carbon material which is obtained at Example 5 is shown in FIG. 3.

Example 6

Except for making the temperature of the second heat treatment 2200°C, the same procedure was performed as in Example 1 to obtain a carbon material.

Comparative Example 1

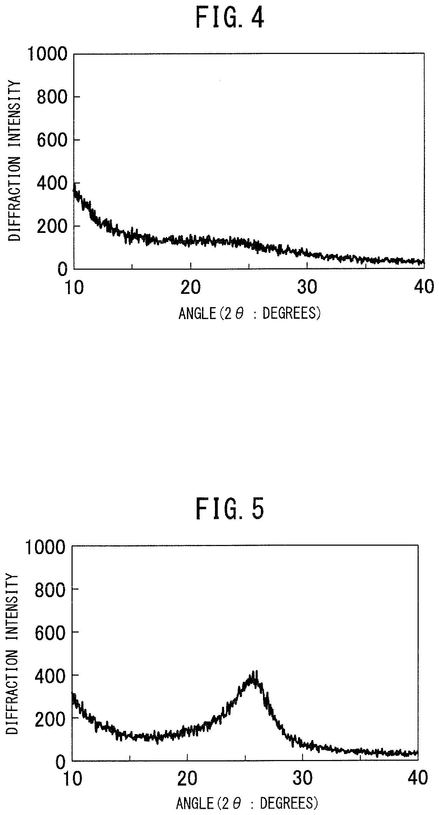

Except for making the temperature of the second heat treatment 200°C, the same procedure was performed as in Example 1 to obtain a carbon material. An example of the XRD of the carbon material which is obtained at Comparative Example 1 is shown in FIG. 4.

Comparative Example 2

Except for making the temperature of the second heat treatment 800°C, the same procedure was performed as in Example 1 to obtain a carbon material.

Comparative Example 3

Except for making the temperature of the second heat treatment 1200°C, the same procedure was performed as in Example 1 to obtain a carbon material.

Comparative Example 4

Except for making the temperature of the second heat treatment 2600°C, the same procedure was performed as in Example 1 to obtain a carbon material. A SEM image of the carbon material which is obtained at Comparative Example 4 is shown in FIG. 7.

As reference examples, samples of the carbon material ketjen black (made by Lion, trade name: EC600JD) used in the past as a catalyst support of a polymer electrolyte fuel cell were prepared. Samples with no heat treatment (Reference Example 1), samples with heat treatment at 1800°C (Reference Example 2), and samples with heat treatment at 2000°C (Reference Example 3) were processed by methods similar to the examples and were similarly measured for BET specific surface area S, cumulative pore volume, $V_{10}/S$ (Q value), and presence of dendritic structures.

As shown in Table 1, Examples 1 to 6 have structures which have both suitably grown stacked structures of graphene and amorphous structures comprised of nanosize graphene derived from the mesoporous pore structures. Furthermore, these carbon materials have dendritic structures. By combination with the amount of steam adsorption per unit area expressed by the Q-value, the catalyst dispersability is good and the moisture retention characteristic of the catalyst layer when made into a cell becomes a range suitable for operation in a low moisture environment. On the other hand, in Comparative Examples 1 to 3, there were dendritic structures, but the graphene was insufficiently stacked, while in Reference Examples 1 to 3, there were no dendritic structures and, judging from the shape of the X-ray diffraction spectrum and value of the Q-value, it was learned that the dispersability of the catalyst and the diffusibility of the gas or the water produced when made into a fuel cell are not sufficient compared with the carbon material of the present invention.

Evaluation Test of Catalyst

Using the example of a hydrogenation catalytic reaction, the carbon materials of Examples 1 to 6 and Comparative Examples 1 to 4 were used as catalyst supports to prepare metal-containing catalysts. The durability as a fuel cell was evaluated in the following way. Platinum was used as the catalyst seed, and the cell performance was evaluated using a fuel cell measurement apparatus for initial performance and results in a cycle deterioration test. The results of evaluation are shown in Table 1.

A chloroplatinic aqueous solution and polyvinyl pyrrolidone were placed in distilled water and stirred at 90°C while pouring in sodium borohydride dissolved in distilled water so as to reduce the chloroplatinic acid. To this aqueous solution, the carbon material of each of Examples 1 to 6 and Comparative Examples 1 to 4 was added and stirred for 60 minutes, then filtered and washed. The obtained solids were dried at 90°C in vacuum, then pulverized and heat treated in a hydrogen atmosphere at 250°C for 1 hour to thereby prepare a catalyst for fuel cell use. Further, the amount of supported platinum of the catalyst was adjusted to 30 mass%.

The particle size of the platinum particles was estimated by the formula of Scherrer from the half value width of the platinum (111) peak in the powder X-ray diffraction spectrum of the catalyst obtained by using an X-ray diffraction apparatus (made by Rigaku, RAD).

The catalyst was added in a stream of argon to a 5%-Nafion solution (made by Aldrich) to give a mass of the Nafion solids of 3 times the mass of the catalyst. The mixture was lightly stirred, then ultrasonic waves were used to crush the catalyst. Butyl acetate was added while stirring to give a solids concentration of the platinum catalyst and Nafion combined of 2 mass% and thereby prepare a catalyst layer slurry.

The catalyst layer slurry was coated on a single surface of a Teflon® sheet by the spray method and dried in an 80°C stream of argon for 10 minutes, then dried in a 120°C stream of argon for 1 hour to obtain an electrode sheet with a catalyst contained in the catalyst layer. Further, the spray conditions etc. were set so that the electrode sheet had an amount of platinum used of 0.15 mg/cm$^2$. The amount of platinum used was found by measuring the dry mass of the Teflon® sheet before and after spraying and calculating the difference.

Furthermore, two 2.5 cm square size electrodes each were cut out from the obtained electrode sheet, two of the same type of electrodes were placed sandwiching an electrolyte film (Nafion 112) so that the catalyst layers contacted the electrode film, and the assembly was hot pressed at 130°C and 90 kg/cm$^2$ for 10 minutes. The assembly was cooled in this state down to room temperature, then only the Teflon® sheets were carefully peeled off so that the catalyst layers of the two electrodes (below, anode and cathode) were fixed to the Nafion film. Furthermore, commercially available carbon cloth (made by ElectroChem, EC-CC1-060) was cut into two sheets of 2.5 cm square size which were placed sandwiching the anode and cathode fixed to the Nafion film and the assembly was hot pressed at 130°C and 50 kg/cm$^2$ for 10 minutes to prepare four types of membrane electrode assemblies (MEA).

The prepared MEAs were loaded into commercially available fuel cell measuring devices and measured for cell performance. The cell performance was measured by changing the voltage between cell terminals from the no-load voltage (normally 0.9 to 1.0V) to 0.2V in stages and measuring the current density when the voltage between cell terminals is 0.8V. Further, as the durability test, a cycle of holding the assemblies at the no-load voltage for 15 seconds and holding the voltage across the cell terminals at 0.5V for 15 seconds was performed 4000 times, then the cell performance was measured in the same way as before the durability test. For the gas, air was supplied to the cathode and pure hydrogen as supplied to the anode to give rates of utilization of respectively 50% and 80%. The respective gas pressures were adjusted to 0.1 MPa by backing pressure valves which were provided downstream of the cell. The cell temperature was set to 70°C, while the supplied air and pure hydrogen were respectively bubbled in distilled water which was warmed to 50°C to wet them. The cell characteristics were evaluated by the amount of current (mA/cm$^2$) per platinum unit area. The durability of the cell was evaluated by the rate of drop. The rate of drop was calculated by the following formula.

$$\texttt{Rate of drop (\%)=\{(Initial characteristic-Characteristic after deterioration)/ Initial characteristic\}\times100}$$

As shown in Table 1, the rates of drop in current of cells using the carbon materials which were obtained in the present invention (Examples 1 to 6) as catalyst supports are extremely small compared with Comparative Examples 1 to 4. This result shows that by using the carbon material for catalyst support use of the present invention, the initial performance was maintained while the durability of the cell was improved. This improvement in the rate of drop of current is believed to be a result of the carbon material for catalyst support use of the present invention having a structure where both stacked structures of graphene and amorphous structures comprised of nanosize graphene are copresent.

Coke, carbon fiber, activated carbon, and other easily graphitizable carbon materials made using pitch as a starting material transform to graphite if heated to a high temperature. Graphite is generally high in oxidation resistance, so using graphite for a support is effective for improvement of the durability of a cell. On the other hand, there are the problems that in the process of heat treatment, the graphite crystal structure becomes rearranged, a fall occurs in the BET specific surface area which is required for the dispersion of the catalyst, and the pore structures end up being crushed. For this reason, in PLT 1, to compensate for the crushing of pores when using activated carbon constituted by a precursor of easily graphitizable carbon, the practice has been to pretreat the carbon in advance to activate it to a high degree, secure a large BET surface area, then secure the pore structures after heat treatment. The present invention uses dendritic carbon material comprised of nanosize graphene as a starting material and heat treats this (second heat treatment) to impart a structure having both suitably grown graphene stacked structures and amorphous structures comprised of nanosize graphene derived from the mesoporous pore structures. For this reason, unlike the carbon material of PLT 1, when used as a support, it is possible to secure gas diffusibility and catalyst activity derived from nanosize graphene and thereby otherwise secure initial performance and doubly achieve durability, so a high cell performance is exhibited.

The carbon material of the present invention is a material which is effective not only for applications of a metal-carrying catalyst support which is introduced here, but also fields in which diffusibility of the gas or liquid is demanded, for example, activated carbon electrodes for electric double-layer capacitor use, air electrodes of lithium air secondary batteries, etc.

Table 1

| | Treatment temp. | Time | BET specific surface area S | Pore volume | $V_{10}/S$ (Q value) | Dendritic structure | XRD (26 degree peak present?) | Half value width | Platinum particle size | Initial characteristic | Characteristic after deterioration | Rate of drop |
|---|---|---|---|---|---|---|---|---|---|---|---|---|
| | °C | hr | m²/g | cc/g | ml/m² | | | Degree | nm | mA/cm² | mA/cm² | % |
| Example 1 | 1600 | 2 | 1200 | 1.0 | $0.5 \times 10^{-3}$ | Maintained | Yes | 0.7 | 3.8 | 165 | 153 | 7.2 |
| Example 2 | 1800 | 2 | 1000 | 1.0 | $0.2 \times 10^{-3}$ | Maintained | Yes | 0.5 | 3.5 | 175 | 165 | 5.7 |
| Example 3 | 2000 | 0.5 | 650 | 0.7 | $0.2 \times 10^{-3}$ | Maintained | Yes | 0.3 | 3.7 | 165 | 155 | 6.1 |
| Example 4 | 2000 | 2 | 600 | 0.7 | $0.2 \times 10^{-3}$ | Maintained | Yes | 0.3 | 3.7 | 160 | 150 | 6.3 |
| Example 5 | 2000 | 4 | 500 | 0.7 | $0.2 \times 10^{-3}$ | Maintained | Yes | 0.3 | 3.8 | 160 | 148 | 7.5 |
| Example 6 | 2200 | 2 | 300 | 0.5 | $0.1 \times 10^{-3}$ | Maintained | Yes | 0.2 | 3.7 | 155 | 145 | 6.3 |
| Comp. Ex. 1 | 200 | 2 | 1325 | 1.2 | $1.2 \times 10^{-3}$ | Maintained | No | - | 3.4 | 170 | 130 | 23.5 |
| Comp. Ex. 2 | 800 | 2 | 1350 | 1.2 | $1.1 \times 10^{-3}$ | Maintained | No | - | 3.7 | 165 | 140 | 15.2 |
| Comp. Ex. 3 | 1200 | 2 | 1300 | 1.1 | $0.9 \times 10^{-3}$ | Maintained | No | - | 3.6 | 170 | 156 | 8.2 |
| Comp. Ex. 4 | 2600 | 2 | 120 | 0.1 | $0.01 \times 10^{-3}$ | None (aggregated) | Yes | 0.2 | Poor support of catalyst | | | |
| Ref. Ex. 1 | - | - | 1280 | 1.3 | $0.4 \times 10$ | None | No | - | 3.6 | 3.6 | 3.6 | 3.6 |
| Ref. Ex. 2 | 1800 | 2 | 450 | 0.8 | $0.02 \times 10^{-3}$ | None | No | - | 3.9 | 3.9 | 3.9 | 3.9 |
| Ref. Ex. 3 | 2000 | 2 | 340 | 0.5 | $0.02 \times 10^{-3}$ | None | No | - | 4.0 | 4.0 | 4.0 | 4.0 |

EP 2 959 970 B1

**Claims**

1. A carbon material for polymer electrolyte fuel cell catalyst support use comprising dendritic carbon mesoporous structures which have 3D structures of branched carbon-containing rod shapes or carbon-containing ring shapes, having a pore size of 1 to 20 nm and a cumulative pore volume of 0.2 to 1.5 cc/g found by analyzing a nitrogen adsorption isotherm by the Dollimore-Heal method, and
having a powder X-ray diffraction spectrum which has a peak corresponding to a 002 diffraction line of graphite between diffraction angles ($2\theta$: degrees) of 20 to 30 degrees and has a peak with a half value width of 0.1 degree to 1.0 degree at 25.5 to 26.5 degrees wherein a BET specific surface area is 200 $m^2$/g to 1300 $m^2$/g and
a ratio $V_{10}$/S (ml/$m^2$) of an amount of steam adsorption (ml/g) at 25°C and a relative pressure of 10% ($V_{10}$) and a nitrogen adsorption BET specific surface area ($m^2$/g) of the carbon material (S) is $0.05 \times 10^{-3}$ to $1.0 \times 10^{-3}$.

2. A method for producing a carbon material for polymer electrolyte fuel cell catalyst support use comprising:

a step of preparing a solution which contains a metal or a metal salt,
a step of blowing in acetylene gas in a state of applying ultrasonic waves to said solution and producing dendritic carbon nanostructures comprising branched rod shapes or ring shapes which are comprised of a metal acetylide which contains said metal,
a step of heating said dendritic carbon nanostructures at 60°C to 80°C in temperature, causing segregation of said metal of said metal acetylide, and producing metal-encapsulated dendritic carbon nanostructures in which said metal is encapsulated in said dendritic carbon nanostructures,
a step of heating said metal-encapsulated dendritic carbon nanostructures to 160°C to 200°C, causing said metal to erupt, and producing dendritic carbon mesoporous structures which have a large number of mesopores at the surface and inside,
a step of washing the mesoporous carbon nanodendrites, and
a step of heat treating said dendritic carbon mesoporous structures under a reduced pressure atmosphere or under an inert gas atmosphere at 1600°C to 2200°C temperature for 0.5 hours to 4.0 hours.

3. The method for producing a carbon material for catalyst support according to claim 2 wherein said metal is silver.

**Patentansprüche**

1. Ein Kohlenstoffmaterial zur Verwendung als Katalysatorträger für eine Polymerelektrolyt-Brennstoffzelle, umfassend dendritische mesoporöse Kohlenstoffstrukturen, die 3D-Strukturen von verzweigten, Kohlenstoff enthaltenden Stabformen oder Kohlenstoff enthaltenden Ringformen aufweisen,
mit einer Porengröße von 1 bis 20 nm und einem kumulativen Porenvolumen von 0,2 bis 1,5 $cm^3$/g, ermittelt durch Analyse einer Stickstoffadsorptionsisotherme mit Hilfe des Dollimore-Heal-Verfahrens, und
mit einem Pulverröntgenbeugungsspektrum, das einen Peak aufweist, der einer 002-Beugungslinie von Graphit zwischen Beugungswinkeln ($2\theta$: Grad) von 20 bis 30 Grad entspricht, und einen Peak mit einer Halbwertsbreite von 0,1 Grad bis 1,0 Grad bei 25,5 bis 26,5 Grad aufweist, wobei
eine BET-spezifische Oberfläche 200 $m^2$/g bis 1300 $m^2$/g beträgt und
ein Verhältnis $V_{10}$/S (ml/$m^2$) einer Dampfadsorptionsmenge (ml/g) bei 25°C und einem relativen Druck von 10% ($V_{10}$) und einer Stickstoffadsorption BET-spezifischen Oberfläche ($m^2$/g) des Kohlenstoffmaterials (S) $0,05 \times 10^{-3}$ bis $1,0 \times 10^{-3}$ beträgt.

2. Ein Verfahren zur Herstellung eines Kohlenstoffstoffmaterials zur Verwendung als Katalysatorträger für eine Polymerelektrolyt-Brennstoffzelle, umfassend:

einen Schritt des Herstellens einer Lösung, die ein Metall oder ein Metallsalz enthält,
einen Schritt des Einblasens von Acetylengas in einem Zustand des Einwirkens von Ultraschallwellen auf die Lösung und des Bildens dendritischer Kohlenstoffnanostrukturen, die verzweigte Stabformen oder Ringformen umfassen, welche ein Metallacetylid beinhalten, das das Metall enthält,
einen Schritt des Erwärmens der dendritischen Kohlenstoffnanostrukturen bei einer Temperatur von 60°C bis 80°C, was eine Trennung des Metalls aus dem Metallacetylid bewirkt, und des Bildens Metall-verkapselter dendritischer Kohlenstoffnanostrukturen, bei denen das Metall in den dendritischen Kohlenstoffnanostrukturen verkapselt ist, einen Schritt des Erwärmens der Metall-vcrkapselten dendritischen Kohlenstoffnanostrukturen auf 160°C bis 200°C, was das Ausbrechen des Metalls bewirkt, und des Bildens dendritischer Kohlenstoff mesoporöser Strukturen, die eine große Anzahl an Mesoporen an der Oberfläche und im Inneren aufweisen, einen Schritt des Waschens der mesoporösen Kohlenstoffnanodendriten und
einen Schritt der Wärmebehandlung der dendritischen Kohlenstoff mesoporösen Strukturen unter einer Atmosphäre verminderten Drucks oder unter einer Intertgasatmosphäre bei einer Temperatur von 1600°C bis 2200°C für 0,5 Stunden bis 4,0 Stunden.

3. Das Verfahren zur Herstellung eines Kohlenstoffmaterials für einen Katalysatorträger nach Anspruch 2, wobei das Metall Silber ist.

## Revendications

1. Matériau de carbone pour une utilisation de support de catalyseur de pile à combustible à électrolyte polymère comprenant des structures mésoporeuses de carbone dendritiques qui présentent des structures 3D de formes de barres contenant du carbone ou de formes d'anneaux contenant du carbone ramifiées,
présentant une taille de pore de 1 à 20 nm et un volume de pore cumulé de 0,2 à 1,5 $cm^3/g$ trouvé par analyse d'une isotherme d'adsorption d'azote par le procédé Dollimore-Heal, et
présentant un spectre de diffraction aux rayons X de poudre qui présente un pic correspondant à une ligne de diffraction 002 de graphite entre des angles de diffraction ($2\theta$: degrés) de 20 à 30 degrés et présente un pic avec une largeur à mi-hauteur de 0,1 degré à 1,0 degré à de 25,5 à 26,5 degrés dans lequel
une surface spécifique BET est de 200 $m^2/g$ à 1 300 $m^2/g$ et
un rapport $V_{10}/S$ ($ml/m^2$) d'une quantité d'adsorption de vapeur d'eau (ml/g) à 25°C et une pression relative de 10 % ($V_{10}$) et d'une surface spécifique BET d'adsorption d'azote ($m^2/g$) du matériau de carbone (S) est de $0,05 \times 10^{-3}$ à $1,0 \times 10^{-3}$.

2. Procédé de production d'un matériau de carbone pour une utilisation de support de catalyseur de pile à combustible à électrolyte polymère comprenant :

   une étape de préparation d'une solution qui contient un métal ou un sel de métal,
   une étape de soufflage dans du gaz d'acétylène dans un état d'application d'ondes ultrasoniques à ladite solution et de production de nanostructures de carbone dendritiques comprenant des formes de barres ou des formes d'anneaux ramifiées qui sont constituées d'acétylure de métal qui contient ledit métal,
   une étape de chauffage desdites nanostructures de carbone dendritiques à de 60°C à 80°C en température, occasionnant une ségrégation dudit métal dudit acétylure de métal, et de production de nanostructures de carbone dendritiques à métal encapsulé dans lesquelles ledit métal est encapsulé dans lesdites nanostructures de carbone dendritiques,
   une étape de chauffage desdites nanostructures de carbone dendritiques à métal encapsulé à de 160°C à 200°C, occasionnant le fait que ledit métal surgit, et produisant des structures mésoporeuses de carbone dendritiques qui présentent un grand nombre de mésopores à la surface et à l'intérieur,
   une étape de lavage des nanodendrites de carbone mésoporeuses, et
   une étape de traitement thermique desdites structures mésoporeuses de carbone dendritiques sous une atmosphère de pression réduite ou sous une atmosphère de gaz inerte à de 1 600°C à 2 200°C en température pendant de 0,5 heure à 4,0 heures.

3. Procédé de production d'un matériau de carbone pour support de catalyseur selon la revendication 2, dans lequel ledit métal est l'argent.

FIG. 1

## FIG. 2

## FIG. 3

# FIG. 4

# FIG. 5

# FIG. 6

SU9000 0.8kV 1.9mm x100k SE ............ 500nm

# FIG. 7

X100,000   100nm

FIG. 8

SU9000 0.8kV 1.5mm X200k SE                    200nm

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008 A
- JP 290062 A
- JP 2011514304 A
- JP 2009538813 A
- JP 2005154268 A
- WO 2009075264 A